# EUROPEAN PATENT SPECIFICATION

(11) **EP 1 486 073 B1**
(45) Date of publication and mention of the grant of the patent: **28.02.2007**
(21) Application number: 03702937.8
(22) Date of filing: 21.02.2003
(51) Int. Cl.: H04N 7/173, H04N 7/00

(54) **METHOD AND APPARATUS FOR CREATING A PERSONAL COMMERCIALS CHANNEL**
VERFAHREN UND GERÄT ZUR HERSTELLUNG EINES PERSÖHNLICHEN FERNSEH-REKLAME-KANALS
PROCEDE ET APPAREIL PERMETTANT DE CREER DES CANAUX DE MESSAGES PUBLICITAIRES PERSONNELS

(30) Priority: 07.03.2002 US 93330
(43) Date of publication of application: 15.12.2004
(73) Proprietor: Koninklijke Philips Electronics N.V., 5621 BA Eindhoven (NL)
(72) Inventor: AGNIHOTRI, Lalitha, NL-5656 AA Eindhoven (NL); GUTTA, Srinivas, V., R., NL-5656 AA Eindhoven (NL); DIMITROVA, Nevenka, NL-5656 AA Eindhoven (NL)
(74) Representative: Gravendeel, Cornelis
(86) International application number: PCT/IB2003/000690
(87) International publication number: WO 2003/075572

(56) References cited:
- WO-A-01/33848
- WO-A-02/19581
- US-A- 5 550 578
- US-A- 5 758 257
- US-A- 5 774 170
- US-A1- 2001 032 333
- US-A1- 2002 026 638

## Description

The present invention relates to video processing. Specifically, the invention relates to a method and apparatus for creating an entertainment channel with a customized content.

Viewers of televisions and other display devices may view programs broadcast over one or more channels at a given instant in time. Each channel represents a predefined frequency spectrum configured to receive program content from a service provider. When the viewer selects a channel to view a program, a receiver coupled to the display device becomes tuned to the service provider for the selected channel. The receiver receives the program content from the service provider and provides the received program content to the display device.

The program content from the service provider generally includes a plurality of commercials or advertisements periodically spaced within and/or at the start and end of the program content. The service provider generally provides specific advertisements based upon an advertisers' demand and the market as perceived by the advertisers. As such, the viewer of a program typically becomes subject to commercials from the service provider which the viewer finds annoying, repetitive and/or irrelevant to his needs. There is no mechanism in which commercials are shown which are based upon the preferences or possible actual needs of particular viewers.

The present invention comprises a method and apparatus for creating a personalized channel capable of providing commercials which are tailored to each viewer's preferences or likely needs. A viewer reference profile defined with respect to at least one attribute descriptive of a commercial is acquired and used to select a commercial from a plurality of commercials stored in a database. A virtual channel is allocated from available channels in a channel list having a plurality of program channels. The selected commercial is then associated with the virtual channel so as to allow display of the selected channel on the display device when the virtual channel is accessed by a user. The virtual channel may be accessed in response to a user request for the channel or automatically in response to the detection of a commercial on the user selected channel.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein.

In the drawings, wherein like reference characters identify like elements throughout the views thereof:
FIG. 1 depicts a block diagram of a system for transmitting and receiving video;
FIG. 2 depicts a block diagram of a video receiver in the system of FIG. 1;
FIG. 3 depicts exemplary application programs stored in video receiver of FIG. 2;
FIG. 4 depicts exemplary data structures stored in the video receiver of FIG. 2;
FIG. 5 depicts one embodiment of a commercials database stored in a video receiver of FIG. 2;
FIG. 6 depicts a flowchart for implementing a method in accordance with the present invention; and
FIG. 7 depicts a more detailed flowchart for an embodiment of the present invention.

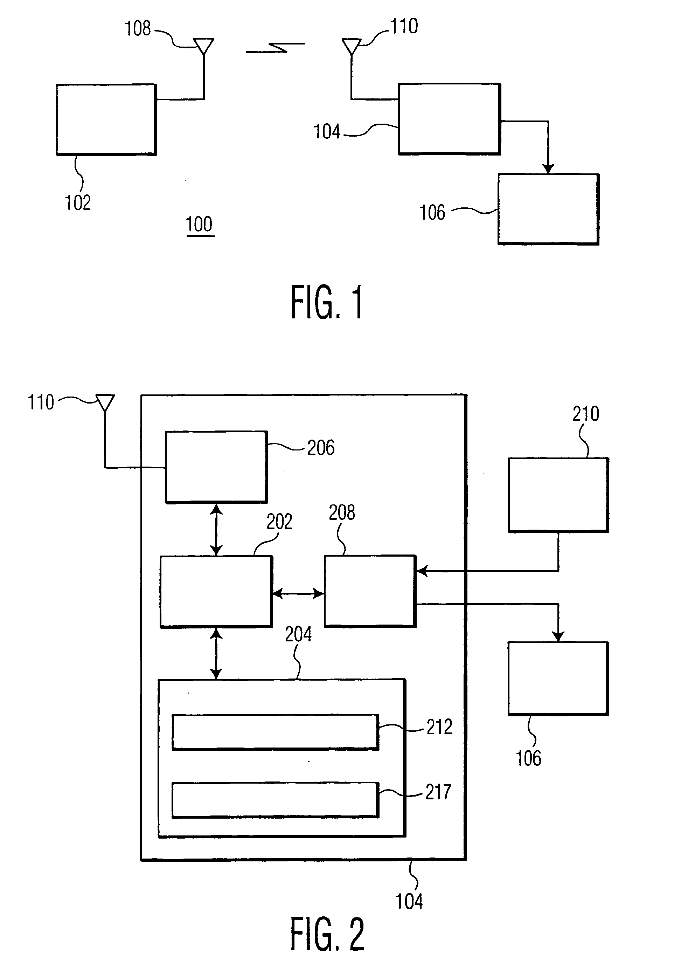

FIG. 1 depicts a block diagram of a system 100 for transmitting and receiving video. The system 100 comprises a service provider 102, a video receiver 104 and a display device 106. For the sake of brevity and clarity, only one of each system component is depicted. However, the system 100 typically includes a plurality of service providers 102, video receivers 104 and display devices 106.

The service provider 102 includes a terrestrial station or program source to broadcast program content via transmitter such as an antenna 108. Although the transmitter is shown as an antenna, the program content could also be sent via other transmitting means such as the Internet. The program content includes a plurality of programs and a plurality of commercials embedded therein. A program may, for example, include a movie or show scheduled for viewing in the system 100. Types of programs include comedies, news programs, sporting events, talk shows, movies, and the like. A commercial includes an advertisement or promotion of a product or service.

The receiver 104 receives program content broadcasted from the service provider 102 via an antenna 110. Although antennae 108, 110 are shown, the program content broadcast may be transmitted via a hardwired connection such as, for example, by a cable or telephone line or via a satellite communication system. The program content is transmitted from the service provider 102 at a specific frequency range corresponding to a program channel. To receive program content from a particular service provider 102, the receiver 104 is tuned to the frequency or program channel used by that service provider 102. As such, one receiver 104 may receive program content from various service providers by selectively tuning to the different channels and/or frequency ranges used by the various service providers.

The received program content of the user selected channel is displayed on a display device 106 coupled to the receiver 104. The display device 106 may include a television set, a computer screen, or other video output device. The receiver 104 is preferably a set top terminal externally coupled to the display device 106. Alternatively, the receiver 104 is integrated within the display device 106.

FIG. 2 depicts a block diagram of the video receiver 104 which comprises a processor 202, a memory 204, an interface 206 and input/output circuits 208. The processor 202 reads and executes software instructions to control the receiver 104. These instructions are contained in application software programs 212 and/or data structures 214 stored in the memory 204. As an alternative, any one or several of the functions of the application software programs 212 may be provided by a dedicated piece of hardware.

The interface 206 enables communication between the receiver 104 and service providers 102 in the system 100. The interface 206 comprises components to receive and transmit program content and other types of signals at the video receiver 104. The interface 206 comprises a signal receiving means such as, for example, a tuner, a demodulator, a local oscillator, and a decoder to convert received program content into baseband. The interface 206 also comprises a signal transmitting means, such as an encoder and a modulator, to configure a signal for transmission from the receiver 104 to the service provider 102. As stated above, the interface 206 between the receiver 104 and the service provider may be a wired interface, wireless interface or a satellite system interface.

The receiver 104 may receive commands from the user, i.e., the viewer, via an input control device 210 via the input/output circuits 208 so as to control the program content being output to the display device 106, for example, to display the user selected channel. The input/output circuits 208 may, for example, comprise a remote control sensor and a video processor. The input control device 210 provides input or selections from a viewer of the display device 106. For example, the input control device 210 enables the selection of a program channel to receive program content. In the present invention, the input control device 210 may also enable the selection of a preferred commercial or specific attributes, e.g., features, of commercials. The input control device 210 may, for example, comprise a remote control, a keyboard or a mouse or any other device which may be used to input.

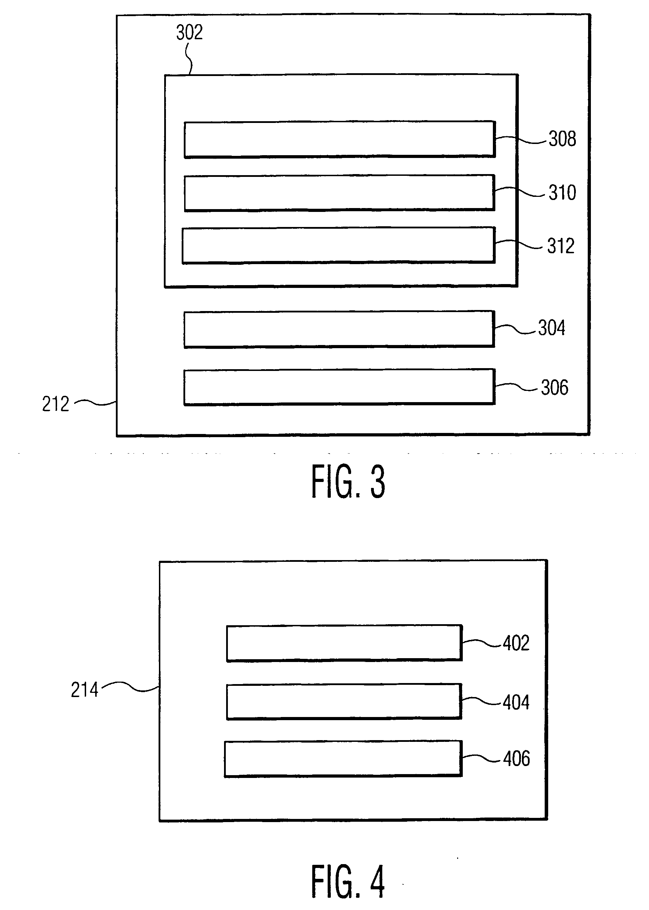

FIG. 3 shows that the application programs 212 stored in the memory 204 include a commercials processing program 302, a user interface program 304 and a recommender program 306. As stated above, the functions of any of the programs may be provided by a dedicated piece of hardware. The commercials processing program 302 instructs the receiver 104 regarding steps required to process commercials. In one embodiment, the commercials processing program 302 instructs the receiver 104 to obtain commercials from program content received via antenna 110 and store the obtained commercials in the memory 204. To implement such functions, the commercials processing program 302 may include a variety of subroutines or modules such as, for example, a commercials detection module 308, a commercials extraction module 310 and a commercials information module 312. Although shown as modules in the commercials processing program 302, one skilled in the art would readily recognize that the commercials detection module 308, commercials extraction module 310 and the commercials information module 312 may alternatively be separate software programs or dedicated pieces of hardware to implement their respective functions.

The commercials detection module 308 instructs the receiver 104 to detect or identify commercials embedded within a program stream received from the service provider 102. The program stream from which the commercials are detected may be from the program that is currently selected, i.e., the program stream currently being sent to the display device 106 and viewed by the user. However, multiple program streams may also be used. Since the memory 204 has a limited capacity, the commercials detection module 308 generally limits the number of program streams from which commercials are identified for storage in the memory 204. For example, commercials may be detected from program streams of specific or preselected program selections or from program streams over a limited period of time. Further, since the memory 204 has a limited capacity, commercials may be deleted as new ones are found and/or as they become outdated. For example, commercials for a one day sale on a Saturday are no longer required on the following Sunday.

One example of the commercials detection module 308 is disclosed in U.S. Patent No. 6,100,941, to N. Dimitrova, T. McGee, J. Elenbaas, E. Leyvi, C. Ramsey, and D. Berkowitz, the entire contents of which are incorporated herein by reference. Further examples of the commercial detection module include EP 1 149 491, "Method and Apparatus For Swapping the Video Contents of Undesired Contents", issued on October 31, 2001 to N. Dimitrova, T. McGee, and L. Agnihotri, EP 1 138 151, "Automatic Signature-Based Spotting, Learning, and Extracting of Commercials and Other Video Content", issued on October 4, 2001 to N. Dimitrova, T. McGee, and L. Agnihotri, and U.S. Patent Application No. 09/945,871, "A Method To Use Transcript Data For Identifying and Learning Commercials", filed on September 4, 2001 by L. Agnihotri, T. McGee, and N. Dimitrova, the entire contents of each being hereby incorporated by reference. The commercials extraction module 310 contains instructions to allow the receiver 104 to extract individual commercials from the detected plurality of commercials from the program stream such that each commercial is stored separately.

Instead of selecting commercials from broadcast streams, the commercial detection module may direct the processor 202 to receive the commercials directly from particular service providers 102, i.e., to download the commercials.

The commercials information module 312 instructs the receiver 104 to store commercials and information associated with commercials in the memory 204. The information includes known attributes of commercials which include but is not limited to a time of day of the commercial, an identifier for the original station, or signal source 102 providing the commercial, a viewing category of the commercial, a transcript or textual description of the commercial, a product or service name, and/or a source of the product or service. The commercials information module 312 may also instruct the receiver 104 to derive additional features of a previously received or extracted commercial. These features may include low level features such as color and edge information, observable features such as speed, continuity of audio, and intangible characteristics of the commercial such as the mood of the commercial. Additionally, the commercials information module 312 may instruct the receiver 104 to annotate or otherwise provide an identifier for each unique commercial. These features and identifiers are also stored in the memory 204.

The user interface program 304 defines a user interface to be displayed by the display device 106. The user interface enables a viewer or user to select or otherwise enter via the input control device 210 viewer preferences of commercials, for example, values of known attributes associated with commercials, types of desired or undesired commercials, or the selection or de-selection of particular commercials. The user interface program 304 then processes the viewer preferences to create a viewer preference profile.

The recommender program 306 recommends or otherwise selects a subset of previously extracted or received commercials for a virtual channel. In a regular mode, the recommender 306 selects or recommends commercials based upon a viewer preference profile or some other pre-defined criteria. However, use of the regular mode often restricts the number of selected commercials available for the virtual channel. To overcome this problem, the recommender program 306 alternatively operates in a "branding" mode where additional commercials are selected if the commercials satisfy a semantic condition provided by the user. The semantic condition may comprise a low-level, observable, and intangible feature. For example, the semantic condition may be to select all commercials from a manufacturer of a commercial selected in the regular mode. If a Lexus commercial is recommended in the regular mode, then all commercials relating to the same manufacturer or source of the normally recommended commercial, e.g., Toyota, are recommended in the branding mode. The additional commercials in the branding mode may also satisfy a significant portion or threshold number of the attributes for the normally recommended commercial.

Known recommender programs 306 have been disclosed which generally recommend or otherwise select television programs. These programs may be tailored to select or recommend commercials in the present invention. One such recommender program 306 is disclosed in U.S. Patent Application No. 09/466,406, filed December 17, 1999 by S. Gutta, which is incorporated herein by reference. This recommender program 306 uses decision trees to recommend television programs. Another recommender program 306 which uses a Bayesian probability model to recommend television programs is disclosed in U.S. Patent Application No. 09/498,271 entitled "Bayesian TV Show Recommender," filed February 4, 2000 by D. Schaffer, the entire contents of which are incorporated herein by reference. Other recommender programs 306 which uses viewing preferences of a user to generate recommendation scores are disclosed by United States Application No. 09/627,139, Filed July 27, 2000 by D. Schaffer, K. P. Lee, and S. Gutta and United States Application No. 09/666,041, filed September 20, 2000 by K. Kurapati, D. Schaffer, and S Gutta, the entire contents of which are incorporated herein by reference. Other implementations of the recommender program 306 are possible, for example, a database query may be used to select a subset of commercials.

FIG. 4, discloses that the data structures 214 stored in the memory 204 include a commercials database 402, a viewer preference list 404 and a virtual channel list 406. The viewer preference list 404 stores the viewer preference profile of a user of the system 100. A user may manually enter viewer preferences of the viewer preference profile using the input control device 210 which may, for example, comprise a remote control device. Alternatively, an application program 212 may be configured to track viewing habits of the user. One form of viewer preferences includes the selection of a particular commercial provided on the user interface or input relating to a preferred type or source of commercial. For example, the viewer preferences may include a rating of a commercial or category of commercial provided from the viewer. Another form of viewer preferences includes values or ranges of one or more attributes or features.

The virtual channel list 406 contains a list of commercials that are selected or recommended in response to the viewer preferences profile. The commercials in the virtual channel list are accessible in a "virtual channel" that is provided in a channel list with other user-accessible channels. The virtual channel is a personalized channel which is allocated from a previously available channel in the channel list, i.e., an available channel that is not currently used by the service provider. In contrast to other channels on the channel list, the information for the recommended commercials is retrieved from previously stored commercials in the database 402 instead of the service provider 102.

According to an embodiment of the present invention, the video receiver 104 switches from the user selected channel to the virtual channel and displays the commercials in the virtual channel when a commercial is detected on the user selected channel. Once the commercial is no longer detected on the user selected channel, the video receiver 104 switches back to the user selected channel.

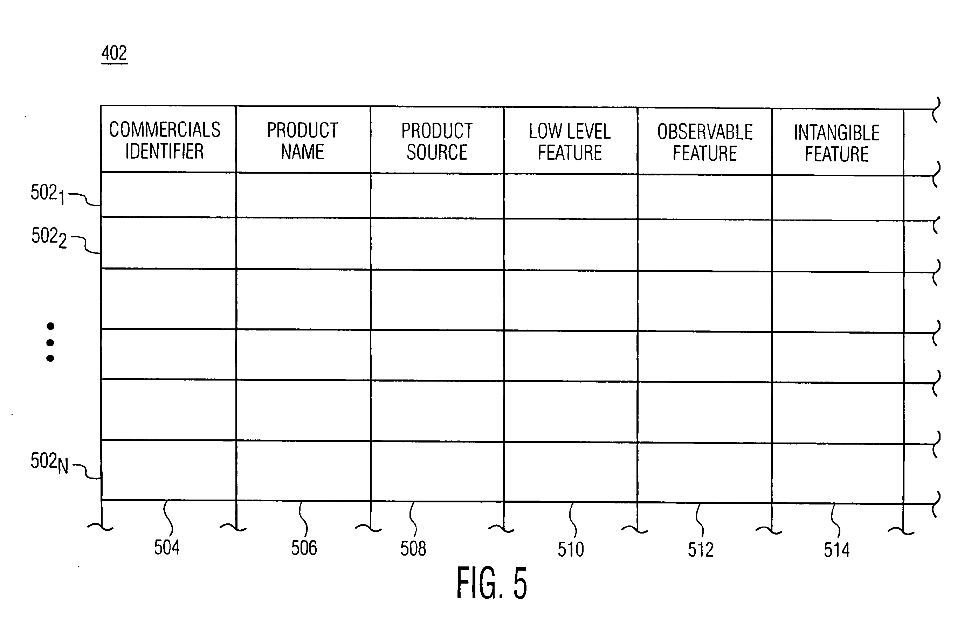

The commercials database 402 is embodied as a data table or data structure stored in the memory 204. FIG. 5 depicts one embodiment of a commercials database 402 comprising a plurality of entries 502₁, 502₂, ..., 502_{N} (generally referred to herein as 502). Each entry 502 includes a commercial along with different known attributes, derived features and other information relating to a particular commercial. Exemplary attributes of commercials include a commercials identifier 504, a product name 506, a product source 508, a color 510 or other low level features, a speed 512 or some other observable feature, and a mood 514 or some other intangible feature. Other types of attributes which may be used for commercial selection associated with commercials may also be included in the entries 502.

The sole use of a name of a product or service for identification purposes is often insufficient since a manufacturer may have several different commercials for one product. Thus, the commercials identifier 504 contains an identifier that uniquely identifies a commercial in the commercials database 402. The product name 506 comprises the name of a product or service advertised in the commercial. The product source 508 comprises the name of the manufacturer or producer of the product or service.

The low level feature 510 includes characteristics of a commercial that the receiver 104 may directly derive from the commercial. Examples of such low level features 510 include color, motion, and edges in images or frames of the commercial. The observable feature 512 includes characteristics of the commercial that are observable from the viewer. Examples of observable features 512 include speed, e.g., slow features or fast features, and continuity of audio, e.g., single speaker, multiple speakers or continuity of music.

The intangible feature 514 includes features derived from a specific combination of characteristics. One example of an intangible feature 514 is the mood of the commercial. For example, a romantic mood is derived from a combination of music, slow imagery and reddish colors and an aggressive mood is derived from high motion, high cut rate, special audio effects and dominance of non-pastel colors in the commercial.

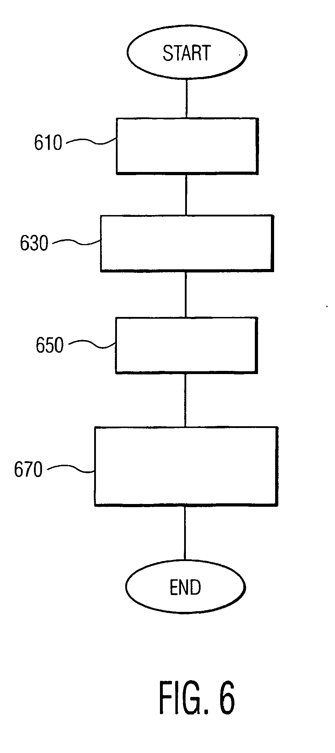

FIG. 6 depicts a flowchart of a method for creating a virtual channel capable of providing a selected commercial for display. According to the present invention, the receiver 104 receives and stores commercials, step 610, and determines the user preferences profile 630. The receiver 104 then selects commercials from the stored commercials using a recommender program as described above which selects commercials which have attributes that correspond to the user preference profile, step 650. The selected commercials are then transmitted to the display via the virtual channel, step 670.

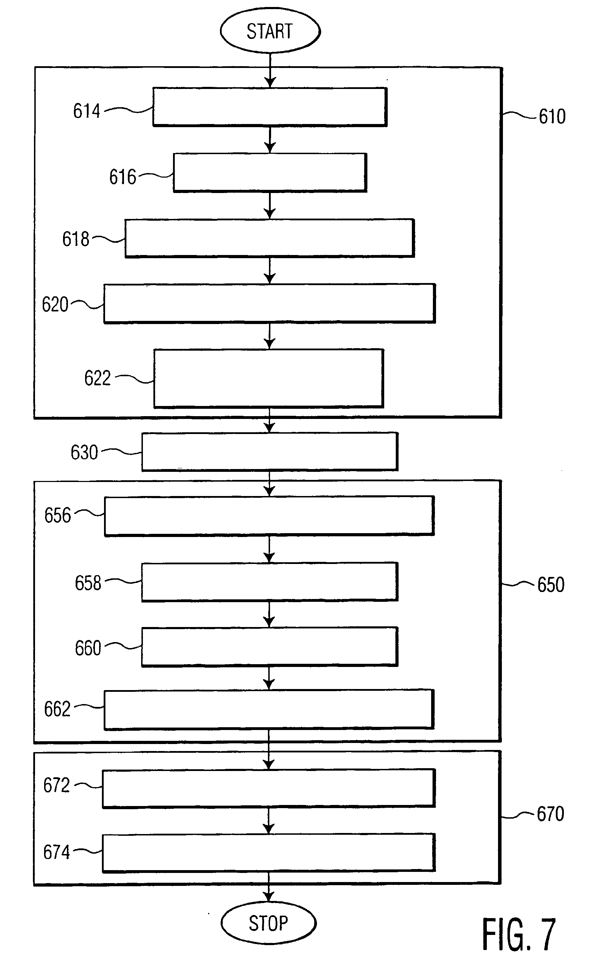

Fig. 7 describes operation of the receiver 104 to implement the present invention according to a preferred embodiment. Although the following method is described with respect to the receiver 104 coupled to the display device 106, the method likewise applies when the video receiver 104 is integrated into the display device 106, for example, in the case of set top terminal integrated into an analog or digital television.

At step 614, the receiver 104 is switched "on" and coupled to the display device 106. At this point, the receiver 104 receives program streams from various channels that are available in the geographic area and displays a user selected one of the channels on the display device 106. Upon being switched on, the receiver may optionally determine which channels are accessible for a particular geographical area and assign the accessible channels into a channel list. The program streams received at the receiver 104 contains program content and a plurality of commercials embedded therein.

Upon receipt of the program streams, the processor 202 executes the commercials detection module 308 to detect commercials within the program streams, step 616. The receiver 104 then extracts the detected commercials, step 618, when the processor 202 executes the commercials extraction module 310. Steps 616 and 618 may be performed on the channel selected by the user or our multiple channels. As stated above, commercials may be detected from program streams over a selected period of time or continuously. Alternatively, the receiver 104 may receive the commercials directly from the program source 102 instead of performing steps 616 and 618.

Once the commercials are extracted from the program stream or otherwise received, the processor 202 executes the commercials information module 312 which causes the receiver 104 to process attributes and derive features from the extracted or received commercials, step 620. Alternatively, the features of the commercials may be received as metadata from the service provider. The commercials, attributes and features are stored in a commercials database 602, step 622.

The receiver 104 also acquires a viewer preference profile of a user of the system 100 via a user interface on the display device 106, step 630, when the processor 202 executes the user interface program 304. The viewer preference profile is stored within a viewer preference list 406. Instead of receiving the user preferences via the input control device 210, the receiver 104 may alternatively monitor viewing habits of the user to derive the viewer preference profile. Step 630 may occur before, during, or after any of steps 614, 616, 618, 620 or 622.

The receiver 104, in accordance with instructions in the recommender program 306, then uses the viewer preferences to select or recommend a subset of commercials from the commercials database 402, step 656. The selection of commercials occurs in a regular mode or a branding mode. The selected commercials are stored in the memory 204 as a virtual channel list 406, step 658. Once the commercials are selected, step 616, the receiver 104 creates a new "virtual" channel in the channel list, step 660. The virtual channel represents a channel which allows viewing of the selected commercials selected during step 656 instead of direct viewing of program selections from the service provider 102. The virtual channel is then linked or associated with the commercials in the virtual channel list 406, step 662, i.e., the selected commercials are stored in the virtual channel.

After the virtual channel is created, the receiver 104 detects when a commercial is being played on the user selected channel, step 672 and transmits a stream of commercials from the virtual channel to the display 106 while the commercial is occurring in the user selected channel, step 674. It is also possible for the user to select the virtual channel as a selected channel.

Instead of waiting for the device to be turned on, the steps for detecting the commercial and selecting commercials to be associated with the virtual channel may be performed continuously. That is, the commercials are detected and selected while the receiver is on and while the receiver is off.

Thus, while there have shown and described and pointed out fundamental novel features of the invention as applied to preferred embodiments thereof, it will be understood that various omissions and substitutions and changes in the form and details of the devices illustrated, and in their operation, may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for creating a personalized channel capable of providing a selected commercial to display on a display device, **characterized in that** said method comprises the steps of:
- receiving a program stream comprising a plurality of programs and a plurality of commercials embedded therein;
- detecting the plurality of commercials in the program stream during said step of receiving;
- extracting the detected plurality of commercials from the program stream;
- storing the extracted plurality of commercials in a database(402) and at least one known commercial attribute descriptive of each respective commercial in the database (402);
- acquiring a viewer preference profile defined with respect to at least one viewer attribute descriptive of a commercial ;
- selecting a selected commercial from the extracted plurality of commercials using the at least one viewer attribute in the viewer preference profile (404) ;
- allocating a virtual channel from an available channel in a channel list having a plurality of program channels; and
- associating the selected commercial with the virtual channel so as to allow display of the selected commercial on the display device (106) when the virtual channel is accessed by a viewer.

2. An apparatus for creating a personalized channel capable of displaying a selected commercial, **characterized in that** said apparatus comprises:
- a database (402) for storing a plurality of commercials and at least one commercial attribute for each commercial;
- a video receiver (206) for receiving a program stream comprising a plurality of programs and the plurality of commercials embedded therein;
- a commercial detection means (308) for detecting the plurality of commercials embedded in the received program stream; and
- a commercial extraction means (310) for extracting the detected plurality of commercials embedded in the program stream, and storing the extracted plurality of commercials in said database (402);
- a viewer preference profile (403) defined with respect to at least one viewer preference attribute descriptive of a commercial ;
- a recommender (306) for selecting a selected commercial from the plurality of commercials stored in said database (402) using the acquired viewer preference profile (403);
- a channel list having a plurality of channels ;
- means for allocating a virtual channel (212) from an available channel in the channel list; and
- means for associating the selected commercial (212) with the virtual channel so as to allow display of the selected commercial on a display device (106) via the virtual channel.

3. The apparatus according to claim 2, **characterized in that** the apparatus further comprises the display device (106) for displaying the selected commercial when the virtual channel is accessed by a user.

4. The apparatus according to claim 2, **characterized in that** the apparatus further comprises:
- a feature extracting means for deriving a feature from each respective commercial of the extracted plurality of commercials.

5. The apparatus according to claim 2, **characterized in that** the apparatus further comprises:
- a feature extracting means (312) for deriving a feature from each commercial of the extracted plurality of commercials.

6. The apparatus according to claim 2, **characterized in that** said recommender (306) includes means for selecting the commercial in accordance with a probability model.

7. The apparatus according to claim 2, **characterized in that** said recommender (306) includes means for generating a recommendation score for each of the plurality of commercials and selecting the selected commercial if the generated recommendation score of the selected commercial exceeds a predetermined threshold value.

8. The apparatus according to claim 2, **characterized in that** said recommender (36) includes means for selecting the selected commercial depending on a correlation of the commercial attribute of the selected commercial and the at least one viewer attribute in the viewer preference profile.

9. The apparatus according to claim 2, **characterized in that** each commercial is defined by a category of interest and said viewer preference profile specifies a category of interest of said user, and said recommender (306) includes means for selecting the selected commercial if the category of interest of the commercial is specified in the viewer preference.

10. The apparatus according to claim 2, **characterized in that** each of the plural commercials in the database includes at least one commercial attribute which is also saved in the database, and said recommender (306) includes means for selecting the selected commercial when the commercial attribute of the selected commercial corresponds with the viewer attribute in the viewer preference profile.

11. The apparatus according to claim 10, **characterized in that** said means for selecting further includes selecting the selected commercial when the commercial attributes of the selected commercial meet a threshold percentage of the viewer attributes.

12. The apparatus according to claim 10, **characterized in that** said means for selecting further includes selecting further commercials that are related to the selected commercial by a semantic relationship defined in the viewer preference profile (404).

13. The apparatus according to claim 12, **characterized in that** the semantic relationship comprises a low-level, observable, and intangible feature.

14. The apparatus according to claim 2, **characterized in that** the apparatus further comprises means for determining when said user selected channel stream includes a commercial and switching to said virtual channel while said user selected channel stream includes a commercial, whereby the selected commercial associated with the virtual channel is displayed on the display device (106) while the user selected channel stream includes a commercial.

## Patentansprüche

1. . Verfahren zur Herstellung eines personalisierten Kanals, das in der Lage ist, eine ausgewählte Fernsehreklame zum Anzeigen auf einem Anzeigegerät bereitzustellen, **dadurch gekennzeichnet, dass** das Verfahren die folgenden Schritte umfasst:
- Empfangen eines Programmstreams, der mehrere Programme und mehrere darin eingebettete Fernsehreklamen umfasst;
- Feststellen der mehreren Fernsehreklamen im Programmstream während des Schritts des Empfangens;
- Abfragen der festgestellten mehreren Fernsehreklamen vom Programmstream;
- Speichern der abgefragten mehreren Fernsehreklamen in einer Datenbank (402) und mindestens eines bekannten Fernsehreklamenattributs, das jede entsprechende Fernsehreklame beschreibt, in der Datenbank (402);
- Erfassen eines Zuschauervorliebenprofils, das in Bezug auf mindestens ein Zuschauerattribut definiert ist, das eine Fernsehreklame beschreibt;
- Auswählen einer ausgewählten Fernsehreklame von den abgefragten mehreren Fernsehreklamen unter Verwendung des mindestens einen Zuschauerattributs im Zuschauervorliebenprofil (404);
- Zuweisen eines virtuellen Kanals von einem verfügbaren Kanal in einer Kanalliste, die mehrere Programmkanäle hat; und
- Verbinden der ausgewählten Fernsehreklame mit dem virtuellen Kanal, um die Anzeige der ausgewählten Fernsehreklame auf dem Anzeigegerät (106) zu ermöglichen, wenn durch einen Zuschauer auf den virtuellen Kanal zugegriffen wird.

2. . Vorrichtung zum Herstellen eines personalisierten Kanals, die in der Lage ist, eine ausgewählte Fernsehreklame anzuzeigen, **dadurch gekennzeichnet, dass** die Vorrichtung Folgendes umfasst:
- eine Datenbank (402) zum Speichern von mehreren Fernsehreklamen und mindestens einem Fernsehreklamenattribut für jede Fernsehreklame;
- einen Videoempfänger (206) zum Empfangen eines Programmstreams, der mehrere Programme und die mehreren darin eingebetteten Fernsehreklamen umfasst;
- ein Fernsehreklamen-Feststellungsmittel (308) zum Feststellen der mehreren Fernsehreklamen, die in dem empfangenen Programmstream eingebettet sind; und
- ein Fernsehreklamen-Abfragemittel (310) zum Abfragen der festgestellten mehreren im Programmstream eingebetteten Fernsehreklamen und Speichern der abgefragten mehreren Fernsehreklamen in der Datenbank (402);
- ein Zuschauervorliebenprofil (403), das in Bezug auf mindestens ein Zuschauervorliebenattribut, das eine Fernsehreklame beschreibt, definiert ist;
- einen Empfehler (306) zum Auswählen einer ausgewählten Fernsehreklame von den mehreren Fernsehreklamen, die in der Datenbank (402) gespeichert sind, unter Verwendung des erfassten Zuschauervorliebenprofils (403);
- eine Kanalliste, die mehrere Kanäle hat;
- Mittel zum Zuweisen eines virtuellen Kanals (212) von einem verfügbaren Kanal in der Kanalliste; und
- Mittel zum Verbinden der ausgewählten Fernsehreklame (212) mit dem virtuellen Kanal, um die Anzeige der ausgewählten Fernsehreklame auf einem Anzeigegerät (106) über den virtuellen Kanal zu ermöglichen.

3. . Vorrichtung nach Anspruch 2, **dadurch gekennzeichnet, dass** die Vorrichtung ferner das Anzeigegerät (106) zum Anzeigen der ausgewählten Fernsehreklame umfasst, wenn durch einen Benutzer auf den virtuellen Kanal zugegriffen wird.

4. . Vorrichtung nach Anspruch 2, **dadurch gekennzeichnet, dass** die Vorrichtung ferner Folgendes umfasst:
- ein Merkmalabfragemittel zum Ableiten eines Merkmals von jeder entsprechenden Fernsehreklame der abgefragten mehreren Fernsehreklamen.

5. . Vorrichtung nach Anspruch 2, **dadurch gekennzeichnet, dass** die Vorrichtung ferner Folgendes umfasst:
- ein Merkmalabfragemittel (312) zum Ableiten eines Merkmals von jeder Fernsehreklame von den mehreren Fernsehreklamen.

6. . Vorrichtung nach Anspruch 2, **dadurch gekennzeichnet, dass** der Empfehler (306) Mittel zum Auswählen der Fernsehreklame gemäß einem Wahrscheinlichkeitsmodell umfasst.

7. . Vorrichtung nach Anspruch 2, **dadurch gekennzeichnet, dass** der Empfehler (306) Mittel zum Erzeugen einer Empfehlungspunktzahl für jede der mehreren Fernsehreklamen umfasst und Auswählen der ausgewählten Fernsehreklame, wenn die erzeugte Empfehlungspunktzahl der ausgewählten Fernsehreklame einen vorbestimmten Schwellenwert übertrifft.

8. . Vorrichtung nach Anspruch 2, **dadurch gekennzeichnet, dass** der Empfehler (36) Mittel zum Auswählen der ausgewählten Fernsehreklame abhängig von einer Korrelation des Fernsehreklamenattributs der ausgewählten Fernsehreklame und des mindestens einen Zuschauerattributs im Zuschauervorliebenprofil umfasst.

9. . Vorrichtung nach Anspruch 2, **dadurch gekennzeichnet, dass** jede Fernsehreklame durch eine Interessenkategorie definiert ist und das Zuschauervorliebenprofil eine Interessenkategorie des Benutzers angibt, und der Empfehler (306) Mittel zum Auswählen der ausgewählten Fernsehreklame, wenn die Interessenkategorie der Fernsehreklame in der Zuschauervorliebe angegeben ist, umfasst.

10. . Vorrichtung nach Anspruch 2, **dadurch gekennzeichnet, dass** jede der mehreren Fernsehreklamen in der Datenbank mindestens ein Fernsehreklamenattribut umfasst, das auch in der Datenbank gespeichert ist, und der Empfehler (306) Mittel zum Auswählen der ausgewählten Fernsehreklame, wenn das Fernsehreklamenattribut der ausgewählten Fernsehreklame mit dem Zuschauerattribut im Zuschauervorliebenprofil übereinstimmt, umfasst.

11. . Vorrichtung nach Anspruch 10, **dadurch gekennzeichnet, dass** das Mittel zum Auswählen ferner das Auswählen der ausgewählten Fernsehreklame, wenn die Fernsehreklamenattribute der ausgewählten Fernsehreklame einem bestimmten Schwellenprozentsatz der Zuschauerattribute entsprechen, umfasst.

12. . Vorrichtung nach Anspruch 10, **dadurch gekennzeichnet, dass** die Mittel zum Auswählen ferner das Auswählen weiterer Fernsehreklamen, die durch eine im Zuschauervorliebenprofil (404) definierte semantische Beziehung mit der ausgewählten Fernsehreklame in Verbindung stehen, umfasst.

13. . Vorrichtung nach Anspruch 12, **dadurch gekennzeichnet, dass** die semantische Beziehung ein Low-Level-, beobachtbares und immaterielles Merkmal umfasst.

14. . Vorrichtung nach Anspruch 2, **dadurch gekennzeichnet, dass** die Vorrichtung ferner Mittel zum Bestimmen, wann der durch den Benutzer ausgewählte Kanalstream eine Fernsehreklame umfasst, und Schalten auf den virtuellen Kanal während der durch den Benutzer ausgewählte Kanalstream eine Fernsehreklame umfasst, wodurch die ausgewählte Fernsehreklame, die mit dem virtuellen Kanal verbunden ist, auf dem Anzeigegerät (106) angezeigt wird, während der durch den Benutzer ausgewählte Kanalstream eine Fernsehreklame umfasst.

## Revendications

1. Procédé pour créer un canal personnalisé qui est capable de fournir un message publicitaire sélectionné pour être affiché sur un dispositif d'affichage, **caractérisé en ce que** ledit procédé comprend les étapes suivantes consistant à:
- recevoir un train de programmes comprenant une pluralité de programmes et une pluralité de messages publicitaires qui y sont intégrés;
- détecter la pluralité de messages publicitaires dans le train de programmes pendant ladite étape de réception;
- extraire la pluralité détectée de messages publicitaires à partir du train de programmes;
- stocker la pluralité extraite de messages publicitaires dans une base de données (402) et au moins un attribut de message publicitaire connu qui est descriptif de chaque message publicitaire respectif dans la base de données (402);
- acquérir un profil de préférences de visionnement qui est défini par rapport à au moins un attribut de visionnement qui est descriptif d'un message publicitaire;
- sélectionner un message publicitaire sélectionné à partir de la pluralité extraite de messages publicitaires utilisant l'au moins un attribut de visionnement dans le profil de préférences de visionnement (404);
- assigner un canal virtuel à partir d'un canal disponible dans une liste de canaux ayant une pluralité de canaux de programme; et
- associer le message publicitaire sélectionné au canal virtuel de manière à permettre l'affichage du message publicitaire sélectionné sur le dispositif d'affichage (106) lorsqu'un téléspectateur accède au canal virtuel.

2. Appareil pour créer un canal personnalisé qui est capable d'afficher un message publicitaire sélectionné, **caractérisé en ce que** ledit appareil comprend:
- une base de données (402) pour stocker une pluralité de messages publicitaires et au moins un attribut de message publicitaire pour chaque message publicitaire;
- un récepteur vidéo (206) pour recevoir un train de programmes comprenant une pluralité de programmes et la pluralité de messages publicitaires y étant intégrés;
- des moyens de détection de messages publicitaires (308) pour détecter la pluralité de messages publicitaires qui sont intégrés dans le train de programmes reçus; et
- des moyens d'extraction de messages publicitaires (310) pour extraire la pluralité détectée de messages publicitaires qui sont intégrés dans le train de programmes et pour stocker la pluralité extraite de messages publicitaires dans ladite base de données (402);
- un profil de préférences de visionnement (403) qui est défini par rapport à au moins un attribut de préférences de visionnement étant descriptif d'un message publicitaire;
- un programme de recommandation (306) pour sélectionner un message publicitaire sélectionné à partir de la pluralité de messages publicitaires qui sont stockés dans ladite base de données (402) à l'aide du profil de préférences de visionnement acquis (403);
- une liste de canaux ayant une pluralité de canaux;
- des moyens pour assigner un canal virtuel (212) à partir d'un canal disponible dans la liste de canaux; et
- des moyens pour associer le message publicitaire sélectionné (212) au canal virtuel de manière à permettre l'affichage du message publicitaire sélectionné sur un dispositif d'affichage (106 par le biais du canal virtuel.

3. Appareil selon la revendication 2, **caractérisé en ce que** l'appareil comprend encore le dispositif d'affichage (106) pour afficher le message publicitaire sélectionné lorsqu'un utilisateur accède au canal virtuel.

4. Appareil selon la revendication 2, **caractérisé en ce que** l'appareil comprend encore:
- des moyens d'extraction de particularités caractéristiques pour dériver une particularité caractéristique à partir de chaque message publicitaire respectif de la pluralité extraite de messages publicitaires.

5. Appareil selon la revendication 2, **caractérisé en ce que** l'appareil comprend encore:
- des moyens d'extraction de particularités caractéristiques (312) pour dériver une particularité caractéristique à partir de chaque message publicitaire de la pluralité extraite de messages publicitaires.

6. Appareil selon la revendication 2, **caractérisé en ce que** ledit programme de recommandation (306) inclut des moyens pour sélectionner le message publicitaire selon un modèle de probabilité.

7. Appareil selon la revendication 2, **caractérisé en ce que** ledit programme de recommandation (306) inclut des moyens pour générer des points de recommandation pour chacun de la pluralité de messages publicitaires et pour sélectionner le message publicitaire sélectionné si les points de recommandation générés du message publicitaire sélectionné dépasse une valeur de seuil prédéterminée.

8. Appareil selon la revendication 2, **caractérisé en ce que** ledit programme de recommandation (306) inclut des moyens pour sélectionner le message publicitaire sélectionné en fonction d'une corrélation de l'attribut de message publicitaire du message publicitaire sélectionné et l'au moins un attribut de visionnement dans le profil de préférences de visionnement.

9. Appareil selon la revendication 2, **caractérisé en ce que** chaque message publicitaire est défini par une catégorie d'intérêt et ledit profil de préférences de visionnement spécifie une catégorie d'intérêt dudit utilisateur, et **en ce que** ledit programme de recommandation (306) inclut des moyens pour sélectionner le message publicitaire sélectionné si la catégorie d'intérêt du message publicitaire est spécifiée dans la préférence de visionnement.

10. Appareil selon la revendication 2, **caractérisé en ce que** chacun des messages publicitaires pluraux dans la base de données inclut au moins un attribut de message publicitaire qui est également sauvé dans la base de données et **en ce que** ledit programme de recommandation (306) inclut des moyens pour sélectionner le message publicitaire sélectionné lorsque l'attribut de message publicitaire particulier du message publicitaire sélectionné correspond à l'attribut de visionnement dans le profil de préférences de visionnement.

11. Appareil selon la revendication 10, **caractérisé en ce que** lesdits moyens pour sélectionner incluent encore la sélection du message publicitaire sélectionné lorsque les attributs de message publicitaire du message publicitaire sélectionné satisfont à un pourcentage de seuil des attributs de visionnement.

12. Appareil selon la revendication 10, **caractérisé en ce que** lesdits moyens pour sélectionner incluent encore la sélection de nouveaux autres messages publicitaires qui sont apparentés au message publicitaire sélectionné par une relation sémantique qui est définie dans le profil de préférences de visionnement (404).

13. Appareil selon la revendication 12, **caractérisé en ce que** la relation sémantique comprend une particularité caractéristique observable et tangible de bas niveau.

14. Appareil selon la revendication 2, **caractérisé en ce que** l'appareil comprend encore des moyens pour déterminer lorsque ledit train de canaux sélectionné par l'utilisateur inclut un message publicitaire et pour passer audit canal virtuel alors que ledit train de canaux sélectionné par l'utilisateur inclut un message publicitaire, cas dans lequel le message publicitaire sélectionné qui est associé au canal virtuel est affiché sur le dispositif d'affichage (106) alors que le train de canaux sélectionné par l'utilisateur comprend un message publicitaire.
